# FASCICULE DE BREVET EUROPEEN

(11) **EP 3 558 821 B1**
(45) Date de publication et mention de la délivrance du brevet: **08.09.2021**
(21) Numéro de dépôt: 17828978.1
(22) Date de dépôt: 19.12.2017
(51) Int. Cl.: B64C 39/02, B64C 39/08

(54) **DRONE VOLANT SOLAIRE COMPRENANT DEUX AILES PORTANTES EN TANDEM SUR LESQUELLES SONT COUPLÉES DES CELLULES PHOTOVOLTAÏQUES**
SOLARDROHNE UMFASSEND ZWEI TANDEM TRAGENDE FLÜGEL MIT PHOTOVOLTAISCHEN ZELLEN
SOLAR DRONE COMPRISING TWO TANDEM LIFTING WINGS COUPLED TO PHOTOVOLTAIC CELLS

(30) Priorité: 23.12.2016 FR 1663272
(43) Date de publication de la demande: 30.10.2019
(73) Titulaire: Xsun, 44350 Guérande (FR)
(72) Inventeur: DAVID, Benjamin, 44420 Piriac Sur Mer (FR)
(74) Mandataire: Gicquel, Frédéric
(86) Numéro de dépôt international: PCT/FR2017/053708
(87) Numéro de publication internationale: WO 2018/115724

(56) Documents cités:
- CN-A- 102 616 096
- CN-A- 104 890 859
- FR-A1- 2 880 867
- US-A1- 2009 292 407
- US-A1- 2011 315 809
- US-A1- 2015 256 123

## Description

Le domaine de l'invention est celui de la conception et de la fabrication de drones volants.

L'invention concerne plus particulièrement les drones volants à voilure fixe alimentés en énergie par des cellules photovoltaïques.

Les drones volants à voilure fixe correspondent à des drones entraînés par des moyens moteurs, et qui comprennent une voilure dont la portance, à partir d'une vitesse prédéterminée de déplacement du drone, permet à ce dernier de voler. Ces drones volants dits « à voilure fixe » s'opposent aux drones volants « à voilure tournante » dont la sustentation est assurée par un ou plusieurs rotors.

Des dispositifs volants de ce type peuvent être de petite ou de grande taille, et être propulsés par différents types de motorisations.

Les drones équipés d'une motorisation utilisant de l'électricité ont pour avantages de disposer d'une autonomie importante. L'art antérieur propose par exemple de tels drones destinés à voler longtemps à une altitude haute ou intermédiaire.

Pour réaliser l'alimentation électrique de ces drones, des accumulateurs électriques et des cellules photovoltaïques sont utilisées. Le jour, les cellules photovoltaïques sont dédiées à l'alimentation électrique du drone et au rechargement des accumulateurs électriques. La nuit, les accumulateurs électriques prennent le relai et permettent au drone de continuer de voler jusqu'à ce que les cellules photovoltaïques soient de nouveau ensoleillées.

Pour améliorer l'autonomie et la capacité d'emport d'un drone, l'art antérieur a proposé des solutions visant à optimiser la capacité d'un drone à emmagasiner de l'énergie électrique à partir de l'ensoleillement

On connaît ainsi des drones présentant un fuselage unique et une aile portante, recouverte de cellules photovoltaïques, d'une envergure très importante par rapport à la longueur du drone.

On connaît aussi des drones présentant une pluralité de fuselages, disposés de manière parallèle, soutenant une aile portante de grande envergure, les fuselages et l'aile portante étant tous recouverts de cellules photovoltaïques.

On connaît encore des drones volants présentant des organes surdimensionnés de manière à augmenter la surface du drone pouvant être recouverte de cellules photovoltaïques. En effet, on retrouve des drones volants présentant un empennage arrière surdimensionné.

Ces différentes solutions permettent d'augmenter la surface d'un avion sur laquelle peuvent être couplées des cellules photovoltaïques. Cependant, ces solutions induisent de multiples inconvénients.

Toutefois, les solutions connues mettent en œuvre des architectures de drones provoquant de fortes contraintes structurelles lorsque le drone est en vol. Ces contraintes structurelles peuvent résulter d'une envergure démesurée d'une aile portante et nécessiter le recours à des matériaux composites de haute technicité. Les contraintes structurelles de ces architectures s'accompagnent alors d'un encombrement important et d'un coût élevé de fabrication des drones volants.

De plus, les architectures connues entraînent un mauvais placement des cellules photovoltaïques par rapport à des éléments structuraux du drone volant, réduisant en conséquence l'ensoleillement global des cellules photovoltaïques couplées sur ce drone. Par exemple, on remarque que les architectures employant de multiples fuselages peuvent créer des zones d'ombres sur des surfaces du drone pourvues de cellules photovoltaïques. De telles architectures nuisent donc à la capacité des cellules photovoltaïques à être ensoleillées, alors que ces mêmes cellules photovoltaïques ajoutent du poids au drone volant. On constate ainsi une dégradation des performances et de l'endurance d'un drone volant conçu selon une de ces architectures.

Un exemple de drone volant avec une architecture employant de multiples fuselages est décrit dans le document de brevet publié sous le numéro CN 104 890 859 A.

On connaît encore des drones volants présentant une capacité à optimiser l'orientation des cellules photovoltaïques en fonction de la position du soleil. Un tel drone volant est décrit dans le document de brevet publié sous le numéro US 2009/0292407 A1.

L'invention a notamment pour objectif de pallier ces inconvénients de l'art antérieur.

Plus précisément, l'invention a pour objectif de proposer un drone volant à voilure fixe et à alimentation électrique par cellules photovoltaïques dont les performances en endurance sont optimisées par rapport à ce qui est permis par l'art antérieur.

L'invention a aussi pour objectif de proposer un tel drone volant dont l'aérodynamisme est optimisé par rapport à des drones équivalents proposés par l'art antérieur.

L'invention a encore pour objectif de proposer un tel drone volant qui dispose d'une architecture entrainant peu de contraintes structurelles et optimisant sa capacité à emmagasiner de l'énergie électrique par l'intermédiaire de cellules photovoltaïques.

Ces objectifs, ainsi que d'autres qui apparaîtront par la suite, sont atteints par l'invention qui a pour objet un drone volant à voilure fixe comprenant :
- un fuselage constitué d'un unique corps central ;
- une voilure constituée de :
   - une aile portante avant définit par une surface alaire A1, une envergure E1 et une corde C1, avec A1 = E1 × C1 ;
   - une aile portante arrière définit par une surface alaire A2, une envergure E2 et une corde C2, avec A2 = E2 × C2 ;
      l'aile portante arrière étant décalée en hauteur et en longueur sur le fuselage par rapport à l'aile portante avant, l'aile portante avant et l'aile portante arrière étant des ailes droites ;
- des moyens de propulsion alimentés au moins par des accumulateurs électriques et/ou des cellules photovoltaïques ;
- des cellules photovoltaïques recouvrant essentiellement les faces supérieures de l'aile portante avant et de l'aile portante arrière ;
caractérisé en ce que :
- l'aile portante avant est rattachée directement sur une hauteur inférieure du corps central en s'étendant à partir de ce corps central, et présente un dièdre nul ou négatif ;
- l'aile portante arrière est rattachée directement sur une hauteur supérieure du corps central en s'étendant à partir de ce corps central, et présente un dièdre nul ou positif ;
- E1 > E2, et C2 > C1;
- la surface alaire A2 est égale à la surface alaire A1.

Un tel drone volant selon l'invention présente une importante surface alaire totale lui permettant de disposer d'un nombre important de cellules photovoltaïques, tout en présentant des qualités aérodynamiques importantes.

En effet, la configuration en tandem des ailes portantes et la taille relative des deux ailes l'une par rapport à l'autre n'impliquent pas l'emploi de matériaux lourds et/ou couteux pour réaliser une unique aile portante de grande taille, ou une aile portante principale d'une taille bien plus importante par rapport à une deuxième aile portante de taille inférieure.

Plus précisément, l'unique corps central du fuselage ainsi que le rattachement direct des ailes portantes sur ce corps central permet au drone de ne pas présenter de dégradation de ses performances aérodynamiques résultante d'un fuselage avec des corps multiples et/ou des bras destinés à porter des ailes portantes.

Le décalage en hauteur et en longueur des ailes sur le fuselage permet de combiner une combinaison en tandem des ailes portantes augmentant la surface alaire totale et le nombre de cellules photovoltaïque, tout en diminuant l'encombrement en largeur total du drone volant, et en maximisant l'exposition au soleil théorique des cellules photovoltaïques.

Grâce à la surface alaire A2 qui est essentiellement égale à la surface alaire A1, le rapport entre la surface alaire totale disponible pour des cellules photovoltaïques et les propriétés aérodynamiques (bonne stabilité générale, ...) du drone volant (et ainsi de ses besoins en énergie) est optimisé. En effet, cette solution permet de doubler la surface alaire disponible pour des cellules photovoltaïques (deux ailes portantes de surface identique) en ajoutant une quantité peu significative de masse au poids total du drone.

Les ailes portantes avant et arrière, en étant des ailes droites, optimisent la capacité du drone à voler à des vitesses subsoniques tout en diminuant la possibilité de la projection de l'ombre d'une aile sur une autre, du fait de l'écartement constant entre les ailes.

En substance, le principe de l'invention permet de proposer une surface de cellules photovoltaïques importante combinée à des performances aérodynamiques optimisées, tendant donc à augmenter notablement l'autonomie du drone.

Selon un mode de réalisation préférentiel, l'aile portante arrière présente un dièdre positif et l'aile portante avant présente un dièdre nul.

Ce mode de réalisation améliore la stabilité longitudinale en vol du drone volant.

Selon une caractéristique avantageuse, le dièdre positif présenté par l'aile portante arrière est compris de 1 degré à 5 degrés.

Un tel dièdre positif permet de conférer suffisamment de stabilité en vol au drone volant tout en lui permettant de présenter des cellules photovoltaïques sur des plans dont leur inclinaison leur permet de bénéficier d'un ensoleillement théorique important.

Avantageusement, l'aile portante avant et l'aile portante arrière sont décalées en longueur sur le fuselage selon une distance de séparation longitudinale DL comprise de 2,5 × C1 à 3,5 × C1.

Préférentiellement, l'aile portante avant et l'aile portante arrière sont décalées en hauteur sur le fuselage selon une distance de séparation en hauteur DH comprise de 0,4 × C1 à 0,6 × C1.

Ces positionnements relatifs des ailes portantes entre-elles permettent d'améliorer la stabilité longitudinale en vol du drone volant.

Ces positionnements relatifs permettent également d'optimiser l'aérodynamisme du drone volant et ainsi de diminuer ses besoins en énergie pour pouvoir voler. Ces positionnements optimisent aussi la capacité d'ensoleillement des cellules photovoltaïques positionnés sur les surfaces supérieures des ailes portantes en évitant des phénomènes d'ombrage d'une aile portante sur une autre.

Selon une autre caractéristique avantageuse, l'aile portante avant présente un vrillage négatif compris de -1 degré à -4 degrés.

Cette caractéristique permet d'obtenir une répartition de la portance de façon elliptique le long de l'aile. De plus, le décrochage interviendra d'abord à l'emplanture, puis à l'extrémité de l'aile.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique d'une vue latérale du drone volant selon l'invention ;
- la figure 2 est une représentation schématique d'une vue du dessus du drone volant selon l'invention ;
- la figure 3 est une représentation schématique d'une vue de face du drone volant selon l'invention.

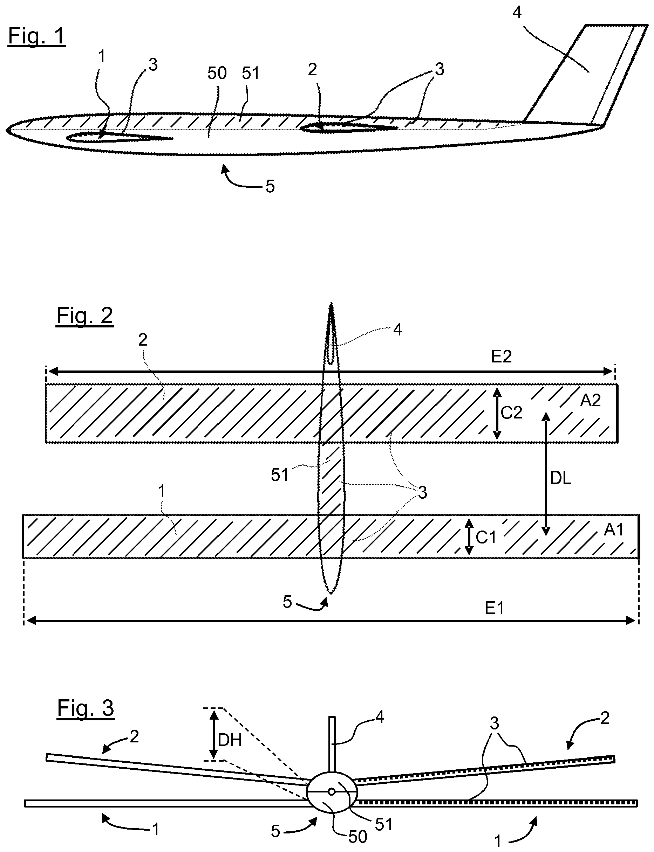

Tel qu'illustré par les figures 1, 2, et 3 le drone volant selon l'invention comprend :
- un fuselage ;
- une voilure constituée de deux ailes portantes disposées en tandem ;
- une dérive 4.

Le drone volant dispose de moyens de propulsion (non représentés) alimentés au moins par des accumulateurs électriques et/ou des cellules photovoltaïques. Ces moyens de propulsions peuvent prendre la forme d'un ou de plusieurs moteurs électriques à hélice couplés sur le fuselage et/ou les ailes portantes.

En référence aux figures 1 à 3, le drone volant comprend également des cellules photovoltaïques 3 qui recouvrent essentiellement les faces supérieures des deux ailes portantes.

Le drone volant est ainsi du type « drone solaire ». Les cellules photovoltaïques 3 permettent au drone volant d'alimenter ses moyens de propulsions et de recharger ses accumulateurs électriques quand elles sont ensoleillées.

Plus précisément, le drone volant comprend une voilure constituée d'une aile portante avant 1 et d'une aile portante arrière 2. Ces ailes portantes sont des ailes droites.

Par l'expression « constituée », il est entendu que le drone volant comporte une voilure formée uniquement par deux ailes portantes. En conséquence, la voilure du drone volant ne comporte pas de troisième plan horizontal qui lui assurerait de la portance en vol.

L'aile portante avant est défini par une surface alaire A1, une envergure E1 et une corde C1, avec A1 = E1 × C1.

L'aile portante arrière, quant à elle, est défini par une surface alaire A2, une envergure E2 et une corde C2, avec A2 = E2 × C2.

Selon le principe de l'invention, de manière à optimiser l'aérodynamisme du drone volant et sa surface alaire totale, l'envergure E1 de l'aile portante avant 1 est strictement supérieure à l'envergure E2 de l'aile portante arrière 2. Préférentiellement, l'envergure E2 est essentiellement de 11 % inférieure à l'envergure E1. De cette manière, les perturbations (tourbillons de sillage) créées par l'aile portante ont moins tendance à impacter l'aile portante arrière, et ainsi à dégrader les performances globales du drone volant.

Encore selon le principe de l'invention, , et tel qu'illustré par la figure 2, la surface alaire A2 est essentiellement égale à la surface alaire A1.

Selon l'invention, la corde C2 est supérieure à la corde C1 de manière à compenser l'envergure E2 réduite de l'aile portante arrière 2 par rapport à l'envergure E1 de l'aile portante avant 1.

En référence aux figures 1 et 3, l'aile portante avant 1 est décalée en hauteur et en longueur sur le fuselage par rapport à l'aile portante arrière 2.

Plus précisément, et tel qu'illustré par ces figures, le fuselage est constitué d'un unique corps central 5 qui présente une hauteur inférieure 50 et une hauteur supérieure 51. Ce fuselage est mono-corps et de forme oblongue. Sur ce fuselage, l'aile portante avant 1 est rattachée directement sur la hauteur inférieure 50 du corps central 5 en s'étendant à partir de ce corps central, et l'aile portante arrière 2 est rattachée directement sur la hauteur supérieure 51 du corps central en s'étendant à partir de ce corps central.

Tel qu'illustré par la figure 1, la hauteur supérieure 51 du corps central 5 est recouverte de cellules photovoltaïques 3.

Selon la solution préférentielle illustrée par la figure 3, l'aile portante arrière 2 présente un dièdre positif et l'aile portante avant 1 présente un dièdre nul. Le dièdre positif présenté par l'aile portante arrière 2 est avantageusement compris de 1 degré à 5 degrés. De cette manière, les perturbations créées par l'aile portante avant impactent moins l'aile portante arrière par rapport à une configuration dans laquelle, vue de face, les ailes portantes se superposeraient. L'aile portante avant présente également un vrillage négatif compris de -1 degré à -4 degrés.

De manière moins préférentielle, l'aile portante arrière peut présenter un dièdre nul et/ou l'aile portante avant peut présenter un dièdre négatif.

En référence à la figure 2, l'aile portante avant et l'aile portante arrière sont décalées en longueur sur le fuselage selon une distance de séparation longitudinale DL comprise de 2,5 × C1 à 3,5 × C1. La distance de séparation longitudinale DL est notamment mesurée entre les foyers des deux ailes.

Tel qu'illustré par la figure 3 et tel qu'évoqué précédemment, l'aile portante avant 1 et l'aile portante arrière 2 sont décalées en hauteur sur le fuselage selon une distance de séparation en hauteur DH comprise de 0,4 × C1 à 0,6 × C1.

A titre indicatif, le drone volant préférentiel décrit ci-dessus a un fuselage présentant une longueur d'environ 3 mètres et une envergure maximale d'environ 5 mètres. Ce drone volant est particulièrement optimisé au niveau aérodynamique (limitation de l'énergie nécessaire pour voler) et énergétique (capacité à générer de l'énergie).

Ce drone fait partie de la catégorie OTAN de classe 1 (-150 kg) et de catégorie mini (de 2 à 20kg).

## Revendications

1. Drone volant à voilure fixe comprenant :
- un fuselage constitué d'un unique corps central (5) ;
- une voilure constituée de :
- une aile portante avant (1) définie par une surface alaire A1, une envergure E1 et une corde C1, avec A1 = E1 × C1 ;
- une aile portante arrière (2) définie par une surface alaire A2, une envergure E2 et une corde C2, avec A2 = E2 × C2 ;
l'aile portante arrière étant décalée en hauteur et en longueur sur le fuselage par rapport à l'aile portante avant, l'aile portante avant (1) et l'aile portante arrière (2) étant des ailes droites ;
- des moyens de propulsion alimentés au moins par des accumulateurs électriques et/ou des cellules photovoltaïques ;
- des cellules photovoltaïques (3) recouvrant essentiellement les faces supérieures de l'aile portante avant et de l'aile portante arrière ;
**caractérisé en ce que** :
- l'aile portante avant est rattachée directement sur une hauteur inférieure (50) du corps central en s'étendant à partir de ce corps central, et présente un dièdre nul ou négatif ;
- l'aile portante arrière est rattachée directement sur une hauteur supérieure (51) du corps central en s'étendant à partir de ce corps central, et présente un dièdre nul ou positif ;
- E1 > E2, et C2 > C1 ;
- la surface alaire A2 est égale à la surface alaire A1.

2. Drone volant selon la revendication précédente, **caractérisé en ce que** l'aile portante arrière (2) présente un dièdre positif et **en ce que** l'aile portante avant (1) présente un dièdre nul.

3. Drone volant selon la revendication précédente, **caractérisé en ce que** le dièdre positif présenté par l'aile portante arrière (2) est compris de 1 degré à 5 degrés.

4. Drone volant selon l'une quelconque des revendications précédentes, **caractérisé en ce que** l'aile portante avant (1) et l'aile portante arrière (2) sont décalées en longueur sur le fuselage selon une distance de séparation longitudinale DL comprise de 2,5 × C1 à 3,5 × C1.

5. Drone volant selon l'une quelconque des revendications précédentes, **caractérisé en ce que** l'aile portante avant (1) et l'aile portante arrière (2) sont décalées en hauteur sur le fuselage selon une distance de séparation en hauteur DH comprise de 0,4 × C1 à 0,6 × C1.

6. Drone volant selon l'une quelconque des revendications précédentes, **caractérisé en ce que** l'aile portante avant (1) présente un vrillage négatif compris de -1 degré à -4 degrés.

## Patentansprüche

1. Flugdrohne mit starrem Tragwerk, umfassend:
- einen Rumpf, der aus einem einzigen zentralen Körper (5) besteht;
- ein Tragwerk, bestehend aus:
-- einem vorderen Tragflügel (1), der von einer Tragfläche A1, einer Spannweite E1 und einer Sehne C1 definiert wird, wobei A1 = E1 x C1;
-- einem hinteren Tragflügel (2), der von einer Tragfläche A2, einer Spannweite E2 und einer Sehne C2 definiert wird, wobei A2 = E2 x C2;
wobei der hintere Tragflügel in Bezug auf den vorderen Tragflügel höhen- und längenmäßig am Rumpf versetzt ist, wobei der vordere Tragflügel (1) und der hintere Tragflügel (2) gerade Flügel sind;
- Antriebsmittel, die mindestens von elektrischen Akkumulatoren und/oder Photovoltaikzellen gespeist werden;
- Photovoltaikzellen (3), die im Wesentlichen die oberen Flächen des vorderen Tragflügels und des hinteren Tragflügels bedecken;
**dadurch gekennzeichnet, dass**:
- der vordere Tragflügel direkt auf einer unteren Höhe (50) des zentralen Körpers befestigt ist, sodass er sich von diesem zentralen Körper erstreckt, und einen Flächenwinkel aufweist, der null oder negativ ist;
- der hintere Tragflügel direkt auf einer oberen Höhe (51) des zentralen Körpers befestigt ist, sodass er sich von diesem zentralen Körper erstreckt, und einen Flächenwinkel aufweist, der null oder positiv ist;
- E1 > E2, und C2 > C1;
- die Tragfläche A2 gleich der Tragfläche A1 ist.

2. Flugdrohne nach dem vorstehenden Anspruch, **dadurch gekennzeichnet, dass** der hintere Tragflügel (2) einen positiven Flächenwinkel aufweist, und dadurch, dass der vordere Tragflügel (1) einen Flächenwinkel von null aufweist.

3. Flugdrohne nach dem vorstehenden Anspruch, **dadurch gekennzeichnet, dass** der positive Flächenwinkel, den der hintere Tragflügel (2) aufweist, im Bereich von 1 Grad bis 5 Grad liegt.

4. Flugdrohne nach einem der vorstehenden Ansprüche, **dadurch gekennzeichnet, dass** der vordere Tragflügel (1) und der hintere Tragflügel (2) am Rumpf längenmäßig um einen Längstrennabstand DL im Bereich von 2,5 x C1 bis 3,5 x C1 versetzt sind.

5. Flugdrohne nach einem der vorstehenden Ansprüche, **dadurch gekennzeichnet, dass** der vordere Tragflügel (1) und der hintere Tragflügel (2) am Rumpf höhenmäßig um einen Höhentrennabstand DH im Bereich von 0,4 x C1 bis 0,6 x C1 versetzt sind.

6. Flugdrohne nach einem der vorstehenden Ansprüche, **dadurch gekennzeichnet, dass** der vordere Tragflügel (1) eine negative Verwindung im Bereich von -1 Grad bis -4 Grad aufweist.

## Claims

1. Fixed-wing flying drone comprising:
- a fuselage consisting of a single central body (5);
- a wing assembly consisting of:
- a front aerofoil (1) defined by a wing surface A1, a wing span E1 and a chord C1, with A1 = E1 x C1;
- a rear aerofoil (2) defined by a wing surface A2, a wing span E2 and a chord C2, with A2 = E2 x C2;
the rear aerofoil being offset in height and length on the fuselage with respect to the front aerofoil, the front aerofoil (1) and the rear aerofoil (2) being straight aerofoils;
- propulsion means supplied at least by electric accumulators and/or photovoltaic cells;
- photovoltaic cells (3) covering mainly the upper faces of the front aerofoil and of the rear aerofoil;
**characterised in that**:
- the front aerofoil is directly attached on a lower height (50) of the central body, extending from the central body, and exhibits a zero or negative dihedron;
- the rear aerofoil is attached directly on an upper height (51) of the central body, extending from this central body, and exhibits a zero or positive dihedron;
- E1 > E2, and C2 > C1;
- the wing surface A2 is equal to the wing surface A1.

2. Flying drone according to the preceding claim, **characterised in that** the rear aerofoil (2) exhibits a positive dihedron and **in that** the front aerofoil (1) exhibits a zero dihedron.

3. Flying drone according to the preceding claim, **characterised in that** the positive dihedron exhibited by the rear aerofoil (2) is from 1 degree to 5 degrees.

4. Flying drone according to any one of the preceding claims, **characterised in that** the front aerofoil (1) and the rear aerofoil (2) are offset in length on the fuselage at a longitudinal separation distance DL of between 2.5 x C1 and 3.5 x C1.

5. Flying drone according to any one of the preceding claims, **characterised in that** the front aerofoil (1) and the rear aerofoil (2) are offset in height on the fuselage by a height separation distance DH of between 0.4 x C1 and 0.6 x C1.

6. Flying drone according to any one of the preceding claims, **characterised in that** the front aerofoil (1) has a negative twist of between -1 degree and -4 degrees.
